# EUROPEAN PATENT APPLICATION

(11) **EP 1 092 351 A1**
(43) Date of publication of application: **18.04.2001**
(21) Application number: 99203386.0
(22) Date of filing: 15.10.1999
(51) Int. Cl.: A23L 1/16

(54) **Pasta product and manufacture**

(71) Applicant: Société des Produits Nestlé S.A., 1800 Vevey (CH)
(72) Inventor: Hauser, Thomas Wilhelm, 12730 Jakarta Selatan (ID); Odermatt, Robert Gerald, 8500 Frauenfeld (CH)
(74) Representative: Wavre, Claude-Alain

(57) **Abstract**

A pasta product obtained by a dry or semi dry extrusion process.

## Description

The present invention relates to a pasta product and to a process for the manufacture of a pasta product.

US4076846 discloses an edible moulding composition mainly comprising a starch, sodium caseinate, glycerol and an emulsifier, which may be used for manufacturing biodegradable packaging films or containers, by extrusion or injection moulding.

US4886440 discloses an injection moulding apparatus and process for the manufacture of food or pet food products having tridimensional shapes such as a bone shape for dogs or fish shape for cats, from a mixture of meat meal and wheat flour.

A first object of the present invention is to provide a pasta product having a unique texture and good organoleptical properties which may be compared with those of traditional pasta products.

A second object of the present invention is to provide a process for manufacturing a pasta product having a unique texture and good organoleptical properties which may be compared with those of traditional pasta products.

The pasta product according to the present invention is a dry or semi dry, ground cereal extrusion product.

The process for manufacturing a pasta product according to the present invention comprises dry or semi dry extruding a ground cereal.

Throughout the present description and claims, the expression "dry or semi dry extrusion" means an extrusion implying no addition or the addition of only relatively little water to the raw material which is extruded.

The present pasta product may be made of a starting raw material which comprises a ground cereal such as a flour or semolina of Durum or hard wheat, rice and/or corn, for example.

The pasta product may be made of a starting raw material which further comprises additives consisting of wheat protein, especially gliadin enriched wheat protein, soft wheat flour, egg material, sodium chloride and/or spices, for example.

The pasta product may have a gelatinization degree of from 0 to 100%.

The pasta product may have a water content of from 6 to 13%, for example.

The process for manufacturing a pasta product according to the present invention comprises dry or semi dry extruding a ground cereal.

Thus, in the present process, a ground cereal is extruded to which no or only very little water is added. Very little water may mean an amount of water such that a mixture obtained by mixing it with a ground cereal has a total water content of from 8 to 20%, for example.

The cereal may be Durum or hard wheat, rice and/or corn, for example.

The process may further comprise adding wheat protein, soft wheat flour, egg material, sodium chloride and/or spices to the ground cereal to be dry or semi dry extruded.

Wheat protein, especially gliadin enriched wheat protein such as the product marketed under the name Lavor Pro by the company Midwest grain products, inc. Atchison, Kansas, USA, may be used in an amount of from about 1 to 3% by weight, in order to reduce stickiness and improve firmness of the cooked pasta, for example.

Soft wheat flour may be added in order to increase the elasticity of the pasta product, for example.

Egg material in the form of whole egg powder, egg white powder or liquid whole egg may be added in order to increase the firmness of the pasta product, for example.

The possible step of preparing a mixture of ground cereal with wheat protein, soft wheat flour, egg material, sodium chloride, spices and/or water may be carried out with traditional bread or pasta making equipments such as baker's mixer and kneader, paddle mixer, mono- or twin screw kneader, or in the barrel of a traditional equipment for the injection moulding of plastics, for example.

The step of dry or semi dry extruding may be carried out with an equipment comprising adequate extrusion means.

Adequate extrusion means may comprise a piston and a nozzle; an extruder and a nozzle; a gear pump and a nozzle; the barrel, screw and nozzle of a traditional equipment for the injection moulding of plastics; or the piston, the recipent and the die of a string press for the pressing of metal wires, for example.

In a preferred embodiment, the present invention is carried out with a traditional equipment for the injection moulding of plastics, in which the extrusion means comprise a screw enclosed in a jacketed barrel, the screw being rotatable and longitudinally translatable in the barrel and the barrel having a downstrean end in form of a nozzle.

The ground cereal or mixture of ground cereal and additives to be extruded may be heated to a temperature of from 30 to 150°C, preferably of from 30 to 90°C, the extrusion means being therefore heatable and temperature controllable, for example.

In another preferred embodiment the present invention is carried out with a traditional equipment for the pressing of metal wires, in which the extrusion means comprise a piston, a press plate or a lock, a recipient and a die.

The ground cereal or mixture of ground cereal and additives may be dry or semi dry extruded under a pressure of from 10 to 500 MPa, preferably under 40 to 120 MPa, for example.

The dry or semi dry extruded pasta product as coming out from the die or nozzle may have a water content of from about 8 to 20%, for example.

It may then be dried to a residual water content of from 6 to 13%, for example.

Surprisingly, it was possible in the present way to manufacture pasta products having a unique texture and good organoleptical properties which could be compared with those of traditional pasta products.

The pasta product and the process according to the present invention are illustrated in the following Examples in which the percentages are by weight.

### Example 1

A pasta product having a spaghetti shape was manufactured by a semi dry extrusion process carried out with the aid of the extrusion means of a 270M type injection moulding equipment manufactured by the company ARBURG AG in Losburg (Germany).

In a paddle mixer a mixture of added water (3.9%) and Durum wheat semolina was prepared which had a water content of 18%.

The mixture was introduced into the barrel of the injection moulding equipment where it was kneaded and heated up to a temperature of 80°C. The kneaded mixture was extruded under a pressure of 65 MPa through a nozzle of 3.5 mm in diameter.

The pasta product thus obtained had a water content of 14.2%. It was then dried to a residual water content of 12.5%.

It had a unique texture and its organoleptical properties were comparable with those of regular Durum wheat spaghetti.

### Examples 2 to 4

Pasta products were manufactured as disclosed in Example 1 with different amounts of added water and under different extrusion pressures.

The pasta products thus obtained had water contents as indicated in recapitulatory Table 1 hereafter, a unique texture and organoleptical properties comparable with those of regular Durum wheat spaghetti.

**Table 1**

| **Example No** | | **1** | **2** | **3** | **4** |
|---|---|---|---|---|---|
| Added water | (%) | 3.9 | 2.9 | 1.9 | 0 |
| Water content of mixture or semolina to be extruded | (%) | 18 | 17 | 16 | 14.1 |
| Extrusion pressure | MPa | 65 | 88 | 120 | 150 |
| Water content of extruded pasta | (%) | 14.2 | 12.9 | 12.0 | 10.6 |
| Residual water content | (%) | 12.5 | 12.9 | 12.0 | 10.6 |

### Example 5

A pasta product having a spaghetti shape was manufactured with the aid of the extrusion means of a horizontal, hydraulic 7500 kN COLLIN stringpress.

The recipient of the stringpress was filled with Durum semolina without any water added.

The semolina was pushed by the piston of the stringpress and dry extruded under a pressure of 400 MPa through a circular die opening of 2.0 mm in diameter.

The semolina temperature increased to about 60 to 80°C under the effect of pressure and friction.

The dry extruded pasta product thus obtained had a diameter of 2.8 mm, a residual water content of 12%, a smooth surface and organoleptical properties comparable with those of regular Durum wheat spaghetti.

## Claims

1. A pasta product, which is a dry or semi dry, ground cereal extrusion product.

2. The pasta product of claim 1, made of a starting raw material which comprises a cereal flour or semolina.

3. The pasta product of claim 2, in which the cereal is Durum or hard wheat, rice and/or corn.

4. The pasta product of claim 2, made of a starting raw material which further comprises additives consisting of wheat protein, soft wheat flour, egg material, sodium chloride and/or spices.

5. The pasta product of claim 1, having a water content of from 6 to 13%.

6. A process for manufacturing a pasta product, which comprises dry or semi dry extruding a ground cereal.

7. The process of claim 6, in which water is mixed with the ground cereal so as to obtain a starting mixture having a total water content of from 8 to 20%.

8. The process of claim 6, in which the cereal is Durum or hard wheat, rice and/or corn.

9. The process of claim 6, which further comprises adding to the ground cereal wheat protein, soft wheat flour, egg material, sodium chloride and/or spices.

10. The process of claim 6, in which the extrusion is carried out with an equipment comprising extrusion means chosen from a group which comprises a piston and a nozzle; an extruder and a nozzle; a gear pump and a nozzle; the barrel, screw and nozzle of an injection moulding equipment; and the piston, recipient and die of a string press.

11. The process of claim 10, in which the extrusion means comprise a screw enclosed in a jacketed barrel, the screw being rotatable and longitudinally translatable in the barrel and the barrel having a downstream end in form of a nozzle.

12. The process of claim 10, in which the extrusion means comprise a piston, a press plate or a lock, a recipient and a die.

13. The process of claim 6 or 9, in which the ground cereal or the mixture of ground cereal and additives to be extruded is heated to a temperature of from 30 to 150°C.

14. The process of claim 6 or 9, in which the ground cereal or the mixture of ground cereal and additives is extruded under a pressure of from 1 to 500 MPa.

15. The process of claim 6, in which after having been extuded the pasta product is dried to a residual water content of from 6 to 13%.
